# EUROPÄISCHE PATENTSCHRIFT

(11) **EP 1 679 022 B1**
(45) Veröffentlichungstag und Bekanntmachung des Hinweises auf die Patenterteilung: **11.05.2011**
(21) Anmeldenummer: 05000323.5
(22) Anmeldetag: 10.01.2005
(51) Int. Cl.: A47G 27/02, A47K 3/00

(54) **Kunststoff-Flächengebilde mit verdichteter Unterseite**
Plastics sheet product with densified underside
Nappe en plastique avec fond densifié

(43) Veröffentlichungstag der Anmeldung: 12.07.2006
(73) Patentinhaber: Derin-Holzapfel & Co. Grundbesitz und Beteiligungs KG, 37276 Meinhard-Frieda (DE)
(72) Erfinder: Stockheim, Uwe, 37281 Wanfried-Heldra (DE); Derin, Martin, 37308 Volkerode (DE)
(74) Vertreter: Schwabe - Sandmair - Marx

(56) Entgegenhaltungen:
- DE-A1- 2 414 862
- DE-A1- 10 325 231
- US-A- 3 981 654
- US-A- 4 689 258
- US-A- 5 120 587
- US-A1- 2002 197 922

## Beschreibung

Die Erfmdung betrifft eine Kunststoff-Flächengebilde mit einer im Vergleich zu seiner Länge und Breite geringen Dicke. Das Flächengebilde kann als Stückware vorliegen und insbesondere einen Bodenbelag oder eine Wanneneinlage bilden. Die Erfindung betrifft aber auch Halbfertigfabrikate, die als Warenbahn beispielsweise auf eine Rolle aufgewickelt sind und erst noch zu einer wunschgemäßen Stückware konfektioniert werden müssen. Ferner hat die Erfindung ein Verfahren zur Herstellung eines solchen Flächengebildes zum Gegenstand.

Kunststoff-Flächengebilde wie die Erfindung sie zwar nicht ausschließlich, aber insbesondere auch betrifft, gehen aus der DE 24 14 862 hervor. Derartige Flächengebilde sind für den Einsatz in Nassbereichen, beispielsweise als Dusch- oder Badewanneneinlage oder als Fußbodenbelag in Bädern einschließlich öffentlichen Bädern oder in einem Saunabereich einsetzbar. Sie können nicht zuletzt aufgrund ihrer Trittschall dämmenden Wirkung, ihrer Strapazierfähigkeit und einfachen Reinigung auch mit Vorteil in Trockenbereichen als Fußbodenbelag oder allgemein als Auflage oder Unterlage verwendet werden. Aufgrund ihres günstigen Preises sind sie ferner im besonderen Maße für den Einsatz in öffentlichen Gebäuden und in Firmengebäuden, insbesondere auch als Fußbodenbeläge in Produktionsstätten, geeignet. Für derartige Verwendungen ist die Trittsicherheit, insbesondere Rutschfestigkeit ein wesentliches Kriterium.

Aus der US 2002/0197922 A1 ist ein Kunststoff-Flächengebilde mit einer textilen Einlage gemäss den Oberbegriffen der Ansprüche 1 u. 2 bekannt. Die Einlage ist in einer die Einlage durchgehend umhüllenden Schaum-Kunststoffschicht eingebettet, welche an der Unterseite verdichtet ist.

Es ist eine Aufgabe der Erfindung, Kunststoff-Flächengebilde hinsichtlich Ihrer Rutschfestigkeit und Drainagewirkung zu verbessern.

Die Erfindung geht von einem Kunststoff-Flächengebilde aus, das aus wenigstens einer Textileinlage und wenigstens einem die Einlage umhüllenden Schaumkunststoff besteht.

Der Schaumkunststoff bildet eine Oberseite und eine Unterseite des Flächengebildes. Die Oberseite ist geprägt oder bedruckt oder sowohl geprägt als auch bedruckt. Derartige Kunststoff-Flächengebilde vertreibt die Anmelderin seit vielen Jahren unter ihrer Marke Sympa-Nova ®.

Nach der Erfindung ist der Schaumkunststoff an der Unterseite oberflächennah verdichtet, so dass an der Unterseite eine hautförmig dünne Schicht mit einer höheren Materialdichte als im Inneren des Flächengebildes erhalten wird. Im Inneren behält der Schaumkunststoff seine im Schäumungsprozess erhaltene Struktur und somit seine sowohl elastische als auch dämpfende Nachgiebigkeit bei. Andererseits ist der Reibungskoeffizient der nur oberflächennah verdichteten Unterseite größer als der Reibungskoeffizient der sich nach dem Schäumen beim bloßen Abkühlen ergebenden Haut.

Obgleich bereits allein durch die Verdichtung ein höherer Reibungskoeffizient und damit eine verbesserte Rutschfestigkeit erhalten wird, ist die Unterseite mit einer Prägung versehen. Bei dem Prägeprozess findet gleichzeitig auch die Verdichtung statt. Durch die Prägung werden an der Unterseite Abragung und demgegenüber zurückstehende Bereiche erhalten, wodurch die Haftfähigkeit der Unterseite auf trockenen und auch auf nassen Unterlagen erhöht wird. Die Prägung umfasst eine Vielzahl von Abragungen, die bevorzugterweise gleichmäßig über die gesamte Unterseite verteilt sind. Pro Quadratzentimeter sollten mehrere der Abragungen gebildet sein. Um die Haftfähigkeit insbesondere in Nassbereichen zu verbessern, sollten zurückstehende Bereiche nicht von Abragungen umschlossen werden. Vielmehr sollten die zurückstehenden Bereiche die Abragungen umgebend miteinander verbunden sein, so dass Wasser überall in allen Flächenbereichen der Unterseite innerhalb der Prägung verdrängt werden und sich nicht stauen kann.

Insbesondere für den Einsatz in Nassbereichen ist es von Vorteil, dass das Flächengebilde gemäss Anspruch 2 eine Vielzahl von Durchbrechungen aufweist und sich von den Durchbrechungen je zu benachbarten Durchbrechungen je wenigstens ein zurückstehender Flächenbereich durchgehend erstreckt. Wasser kann daher von überall in wenigstens eine der Durchbrechungen verdrängt werden, insbesondere wenn eine Person über das als Bodenbelag verwendete Flächengebilde geht.

In alternativen Ausführungen gemäss Anspruch 1 weist das Kunststoff-Flächengebilde beabstandet nebeneinander verlaufende, die Unterseite oder einen Teil der Unterseite bildende Rippen und quer zu den Rippen beabstandet nebeneinander verlaufende Stege und zwischen den Rippen und Stegen verbleibende Durchbrechungen auf. Die Rippen können insbesondere parallel nebeneinander verlaufen. Das gleiche gilt vorzugsweise auch für die Stege. Die Rippen und Stege bilden vorteilhafterweise bereits das Flächengebilde. Sie können als eine Struktur bzw. Strukturierung erster Ordnung angesehen werden, und die Unterseitenprägung als eine Struktur bzw. Strukturierung zweiter Ordnung. Die Rippen stehen an der Oberseite und/oder der Unterseite vorteilhafterweise über die Stege vor, so dass das Gewicht einer über das Flächengebilde gehenden oder darauf stehenden Person oder eines darauf abgestellten Gegenstandes vorteilhafterweise zumindest im wesentlichen von den Rippen getragen wird. Die Rippen sollten eine Breite von wenigstens 4 mm aufweisen und nicht breiter als 15 mm sein und über die Breite der Rippen je mehrere der Abragungen gebildet sein.

Die Abragungen können aus den zurückstehenden Bereichen um etwa ein Zehntel Millimeter oder gegebenenfalls auch um wenige Zehntel Millimeter vorragen. Dies genügt zur Verbesserung der Haftfähigkeit und Drainagewirkung einerseits und verändert das Trittgefühl im Vergleich mit einem an der Unterseite nicht geprägten Flächengebilde zumindest nicht spürbar.

Der Flächenanteil der Abragungen sollte gemessen an der Gesamtfläche der Unterseite wenigstens 30% und höchstens 70% betragen, wobei in senkrechter Draufsicht auf das Kunststoff-Flächengebilde die mit der Prägung versehene Fläche die Bezugsfläche bildet.

Die Erfindung betrifft ferner ein Verfahren zur Herstellung eines Kunststoff-Flächengebildes nach Anspruch 1. In dem Verfahren wird eine Textileinlage mit einem Plastisol beschichtet. Das Plastisol wird anschließend geschäumt. Die textile Einlage ist ein Gewebe oder eine Maschenware, dessen oder deren Fäden so angeordnet sind, dass als Zwischenprodukt ein Flächengebilde aus beabstandet nebeneinander verlaufenden, an einer Oberseite und einer Unterseite nach außen sich wölbenden Rippen und die Rippen verbindenden Querstegen aus Schaumkunststoff entsteht. Die Oberseite der Rippen wird geprägt oder bedruckt oder geprägt und bedruckt. Die Unterseite der Rippen wird erfindungsgemäß die Wölbung der Rippen verringernd oberflächennah verdichtet. Die Verdichtung wird durch Prägung geschaffen. Durch den Verdichtungsprozess, bzw. Prägeprozess, wird die Unterseite sozusagen planiert.

Als Plastisole kommen insbesondere thermoplastische Plastisole, beispielsweise PVC und Acrylate, in Betracht. Als Maschenware für die Einlage werden Gewirke bevorzugt. Die textile Einlage kann beispielsweise aus Polyester gebildet sein.

Das Kunststoff-Flächengebilde kann abgesehen von der Unterseitenverdichtung oder -prägung insbesondere gemäß der DE 24 14 862 A1 gebildet sein und/oder hergestellt werden. Die Lehre der DE 24 14 862 A1 wird diesbezüglich in Bezug genommen.

Bevorzugte Merkmale werden auch in den Unteransprüchen und deren Kombinationen offenbart.

Ein Ausführungsbeispiel der Erfindung wird nachfolgend anhand von Figuren erläutert. An dem Ausführungsbeispiel offenbar werdende Merkmale bilden je einzeln und in jeder Merkmalskombination die Gegenstände der Ansprüche und auch die vorstehend beschriebenen Ausführungen vorteilhaft weiter. Es zeigen:
- Figur 1: ein Kunststoff-Flächengebilde in einer perspektivischen Sicht,
- Figur 2: das Kunststoff Flächengebilde in einer Draufsicht auf dessen Oberseite,
- Figur 3: eine textile Einlage,
- Figur 4: eine Draufsicht auf eine Unterseite des Kunststoff-Flächengebildes und
- Figur 5: eine Draufsicht auf eine Unterseite eines Kunststoff-Flächengebildes aus dem Stand der Technik.

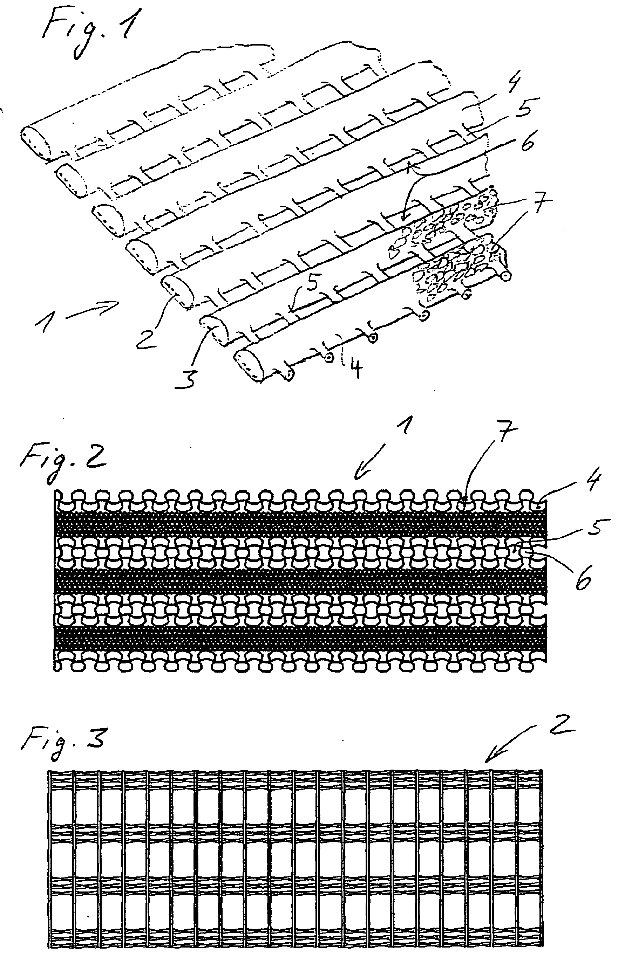

Figur 1 zeigt ein Kunststoff-Flächengebilde 1 aus Schaumkunststoff 3 und einer in den Schaumkunststoff 3 eingebetteten, verstärkenden Einlage 2. Der Schaumkunststoff kann insbesondere geschäumtes PVC oder geschäumtes Acrylat sein. Der Schaumkunststoff 3 umhüllt die Einlage 2 und bildet parallel nebeneinander beabstandet sich erstreckende Rippen 4 und die Rippen 4 verbindende Querstege 5, die parallel zueinander beabstandet und rechtwinklig zu den Rippen 4 sich erstrecken. Zwischen je zwei benachbarten Rippen 4 und benachbarten Stegen 5 verbleibt eine Durchbrechung 6. Die Oberseiten der Rippen 4 sind mit einer Prägung 7 versehen. In Figur 1 ist nur für zwei der Rippen 4 die Oberseitenprägung 7 angedeutet. In gleicher Weise sind die weiteren Rippen 4 über die gesamte Oberseite des Flächengebildes 1 mit der Prägung 7 versehen. Die Oberseite kann des weiteren bedruckt sein, beispielsweise mit einem Muster oder einem Bildmotiv. Die Unterseiten der Rippen 4 sind über die gesamte Unterseite des Flächengebildes 1 mit einer weiteren Prägung 8 versehen. Die Rippen 4 bilden mit den Stegen 5 und den Durchbrechungen 6 eine primäre Struktur des Flächengebildes 1, und die Oberseitenprägung 7 sowie die Unterseitenprägung 8 bilden je eine sekundäre Struktur.

Figur 2 zeigt das Flächengebilde 1 in einer Draufsicht auf die Oberseite.

Figur 3 zeigt die Einlage 2 in einer Draufsicht. Die Einlage 2 ist ein Gewirk aus Polyester. Man erkennt die Kettfäden und die Schussfäden. Die Schussfäden sind jeweils in Gruppen von mehreren Fäden angeordnet, die sich über die Breite der Gewirkbahn in Form von parallelen Bändern erstrecken. Der Abstand der Schussfäden ist innerhalb der Bänder deutlich geringer als der Abstand zwischen den Bändern und auch deutlich kleiner als der Abstand zwischen den Kettfäden.

Für die Herstellung des Flächengebildes 1 wird auf die Einlage 2 ein thermoplastisches Plastisol, beispielsweise PVC oder Acrylat, aufgetragen. Das Plastisol schlägt durch die Einlage 2. Hierauf wird die beschichtete Bahn durch einen Gelierofen geleitet, in dem eine Temperatur herrscht, bei der das dem Plastisol beigefügte Blähmittel noch nicht aktiviert wird, wohl aber das Polymermaterial mit dem Weichmacher angeliert. Die Bahn mit dem so vorgelierten Polymer wird anschließend durch einen Aufschäumofen geleitet, in dem das Blähmittel im gelierten Plastisol aktiviert wird und die Beschichtung aus geliertem Kunststoff in eine Schaumkunststoffbahn von weitaus größerem scheinbaren Volumen verwandelt wird.

Der Schäumprozess wird durch Kühlen der Bahn abgebrochen. Das Flächengebilde 1 liegt in diesem Moment als Bahnmaterial in der primären Struktur vor. In einem nächsten Schritt wird an der Unterseite der Bahn die Unterseitenprägung 8 gebildet. Anschließend wird die Oberseite bedruckt und schließlich mit der Oberseitenprägung 7 versehen. Die Einlage 2 dient nicht nur der Verstärkung und in dieser Funktion als Träger für den Schaumkunststoff, sondern gibt gleichzeitig auch die Form der primären Struktur vor. Im Bereich der Schussfadenbänder bilden sich die Rippen 4 und entlang den Kettfäden die Stege 5, wobei die Rippen 4 die Bänder und die Stege 5 die Kettfäden jeweils umhüllen.

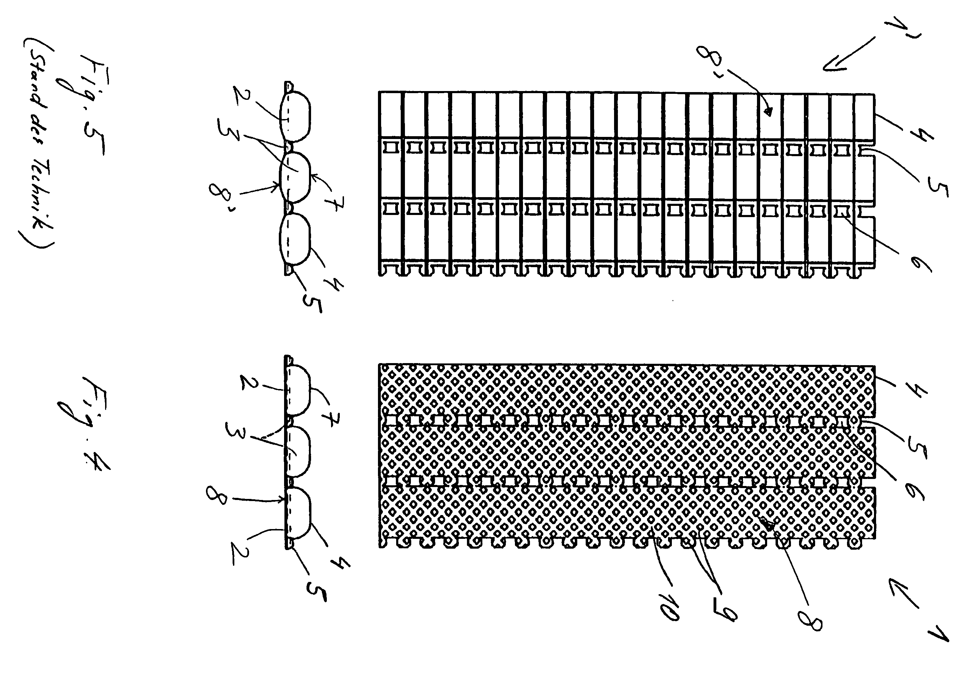

Figur 5 zeigt ein herkömmliches Kunststoff-Flächengebilde 1' in einem oberen Figurenteil in einer Draufsicht auf dessen Rückseite und in einem unteren Figurenteil in einem Querschnitt. Wie die Darstellung im Querschnitt erkennen lässt, sind die nach dem Schäumprozess an ihren Ober- und Unterseiten nach außen gewölbten Rippen 4 durch das Aufbringen der Oberseitenprägung 7 planiert, während die nicht weiter behandelten Unterseiten sich nach wie vor bauchig nach außen wölben. Die Rippen 4 sind an ihren Unterseiten ferner grob zerklüftet.

Figur 4 zeigt das erfmdungsgemäß mit der Rückseitenprägung 8 versehene Flächengebilde 1, im oberen Figurenteil in einer Draufsicht auf die Rückseite und im unteren Figurenteil in einem Querschnitt. In der Querschnittsdarstellung ist die mit der Prägung 8 einhergehende Verdichtung an der Unterseite erkennbar. Um die Prägung 8 zu bilden, wird wie vorstehend geschildert die Bahn nach dem Schäumen gekühlt und der Schäumprozess dadurch abgebrochen. Anschließend wird die Bahn an ihrer Unterseite erwärmt, falls PVC das Schaummaterial bildet, auf eine Temperatur zwischen 170 und 180°C, und zwischen einer Prägewalze und einer Gegenwalze geprägt. Für das Prägen wird die Bahn nicht über ihre gesamte Stärke gleichmäßig, sondern nur an der Unterseite bis zu einer Tiefe erwärmt, die einem Bruchteil der Stärke der Bahn vor der Verdichtung an der Unterseite entspricht, beispielsweise einem Fünftel bis Zehntel, vorzugsweise höchstens ein bis zwei Millimeter tief, und in diesem partiell nur oberflächennah erwärmten Zustand geprägt. Der Verdichtungsprozess erfasst somit nur das Schaummaterial innerhalb des oberflächennahen Tiefenbereichs, der die für die Verdichtung erforderliche Temperatur aufweist. Der überwiegende Teil des Schaummaterials behält hingegen seine Schaumstruktur aus dem Schäumprozess bei. Falls von der Erwärmung und Verdichtung das Schaummaterial bis zu einer Tiefe von höchstens 1 bis 2 mm erfasst wird, weist die nach dem Verdichten an der Unterseite erhaltene Haut eine Stärke von vorzugsweise höchstens einem Zehntel oder allenfalls wenigen Zehnteln Millimeter auf. Würde ein herkömmliches Flächengebilde 1 mit nur einer Oberseitenprägung 8' (Fig. 5) beispielsweise eine Stärke von 6 mm aufweisen, so hat das erfindungsgemäß mit der Unterseitenprägung 8 versehene, ansonsten gleiche Flächengebilde 1 nur noch eine Stärke von beispielsweise 5 mm.

Grundsätzlich würde bereits nur eine oberflächennahe Verdichtung der Unterseite des Flächengebildes 1 genügen, um die Haftung insbesondere für Verwendungen in Trockenbereichen, beispielsweise auf glatten Steinfußböden, gegenüber den herkömmlichen Flächengebilden 1' zu verbessern. In dem vorstehend beschriebenen Verfahren würde in solch einer Ausbildung die Prägewalze für das Prägen der Unterseite durch eine Glättwalze ersetzt werden.

Das Flächengebilde 1 des Ausführungsbeispiels ist an seiner Unterseite allerdings mit der Prägung 8 versehen, wodurch in Trockenbereichen die Haftung und in Nassbereichen zusätzlich die Drainage verbessert wird. Im Vergleich mit der grob zerklüfteten Unterseite, wie sie sich aus dem Schäumprozess auf natürliche Weise ergibt, bildet die Prägung 8 eine Feinstruktur, wie sie beispielhaft in Figur 4 dargestellt ist. Sie ist über die Unterseite des Flächengebildes 1 gleichmäßig verteilt als regelmäßiges Muster aus Abragungen 9 und demgegenüber zurückstehenden Bereichen 10 gebildet. Die Abragungen 9 ragen wie kurze Stifte oder schmale Noppen aus den zurückstehenden Bereichen 10 auf. Die zurückstehenden Bereiche 10 bilden gegenüber der zerklüfteten Oberfläche der nicht geprägten Unterseite eine nahezu plane Grundfläche. Die Abragungen 9 sind untereinander gleich. Die Abragungen 9 sind in Längsrichtung der Rippen 4 in parallelen Reihen nebeneinander angeordnet, wobei die benachbarten Reihen zueinander jeweils einen Versatz aufweisen, so dass Diagonalreihen entstehen, die schräg zu der Längsrichtung der Rippen 4 weisen.

Die zurückstehenden Bereiche 10 sind miteinander verbunden, so dass sie eine einzige, zusammenhängende zurückstehende Fläche bilden. Innerhalb der Abragungen 9 sind keine weiteren zurückstehenden Bereiche gebildet. Die zurückstehenden Bereiche 10, d.h. die zusammenhängend zurückstehende Fläche, erstreckt sich bis in jede der Durchbrechungen 6. Die Abragungen 9 sind flächenmäßig so klein, dass über die Breiten der einzelnen Rippen 4 gesehen, jeweils mehrere der Abragungen 9 nebeneinander gebildet werden können. Bei Verwendung in Nassbereichen kann sich unterhalb der Rippen 4 kein Stauwasser sammeln, da das Wasser auch aus den mittleren Bereichen der Rippen 4 nach beiden Seiten innerhalb der zurückstehenden Bereiche 10 bis in die Durchbrechungen 6 verdrängt wird, wenn auf das Flächengebilde 1 eine Druckkraft von oben ausgeübt wird. Der Drainageeffekt der Unterseitenprägung 8 wird durch den Versatz der Längsreihen der Abragungen 9 noch verstärkt, da sich aufgrund des Versatzes zwischen den Abragungen 9 diagonal gerade Kanäle bilden, die sich aus allen Bereichen der Unterseite je bis zu einer nächsten oder übernächsten der Durchbrechungen 6 erstrecken. Die Feinheit der Unterseitenprägung 8 und die Geometrie der Abragungen 9 und zurückstehenden Bereiche 10 haben somit in Kombination mit den Durchbrechungen 6 eine besonders gute Drainagewirkung zur Folge.

## Patentansprüche

1. Kunststoff-Flächengebilde (1) aus wenigstens einer textilen Einlage (2) und die Einlage (2) umhüllendem Schaumkunststoff (3), der an der Oberseite des Flächengebildes (1) geprägt und/oder bedruckt und an der Unterseite des Flächengebildes (1) verdichtet und mit einer Prägung (8) versehen ist, die eine Vielzahl von Abragungen (9) aufweist,
**dadurch gekennzeichnet, dass**
das Flächengebilde (1) beabstandet nebeneinander verlaufende, die Unterseite oder einen Teil der Unterseite bildende Rippen (4) und quer zu den Rippen (4) beabstandet nebeneinander verlaufende Stege (5) und zwischen den Rippen (4) und Stegen (5) verbleibende Durchbrechungen (6) aufweist, wobei die Rippen (4) eine Breite von wenigstens 4 mm und höchstens 15 mm haben und über die Breite der Rippen (4) je mehrere der Abragungen (9) gebildet sind.

2. Kunststoff-Flächengebilde (1) aus wenigstens einer textilen Einlage (2) und die Einlage (2) umhüllendem Schaumkunststoff (3), der an der Oberseite des Flächengebildes (1) geprägt und/oder bedruckt und an der Unterseite des Flächengebildes (1) verdichtet und mit einer Prägung (8) versehen ist, die aus Abragungen (9) und zurückstehenden Flächenbereichen (10) besteht,
**dadurch gekennzeichnet, dass**
die zurückstehenden Bereiche (10) die Abragungen (9) umgeben und das Flächengebilde (1) Durchbrechungen (6) aufweist und sich von den Durchbrechungen (6) je zu benachbarten Durchbrechungen (6) je wenigstens einer der zurückstehenden Bereiche (10) durchgehend erstreckt, um eine Drainagewirkung zu verbessern.

3. Kunststoff-Flächengebilde nach Anspruch 1 oder 2, **dadurch gekennzeichnet, dass** die Unterseitenprägung (8) mehrere Abragungen (9) pro Quadratzentimeter aufweist.

4. Kunststoff-Flächengebilde nach einem der vorhergehenden Ansprüche, **dadurch gekennzeichnet, dass** die Abragungen (9) in Reihen nebeneinander und die Reihen zueinander mit Versatz angeordnet sind.

5. Kunststoff-Flächengebilde nach einem der vorhergehenden Ansprüche, **dadurch gekennzeichnet, dass** die Unterseitenprägung (8) ein Noppenmuster ist oder umfasst.

6. Kunststoff-Flächengebilde nach einem der vorhergehenden Ansprüche, **dadurch gekennzeichnet, dass** das Flächengebilde (1) als Bodenbelag verwendet wird.

7. Verfahren zur Herstellung eines Kunststoff-Flächengebildes (1) nach Anspruch 1, bei dem:
a) auf eine textile Einlage (2) ein Plastisol aufgebracht und das Plastisol geschäumt wird, so dass beabstandet nebeneinander verlaufende, an einer Oberseite und einer Unterseite nach außen gewölbte Rippen (4) und die Rippen (4) verbindende Querstege (5) aus Schaumkunststoff (3) entstehen,
b) die Oberseite der Rippen (4) geprägt und/oder bedruckt wird
c) und die Unterseite der Rippen (4) die Wölbung verringernd oberflächennah verdichtet und mit einer Prägung (8) versehen wird.

## Claims

1. A plastic planar structure (1) consisting of at least one textile inlay (2) and foam plastic (3) which envelops the inlay (2) and is embossed and/or printed on the upper side of the planar structure (1) and compressed and provided with an embossment (8) on the lower side of the planar structure (1), wherein said embossment (8) comprises a plurality of protrusions (9),
**characterised in that**
the planar structure (1) comprises ribs (4) which run adjacently spaced and form the lower side or a part of the lower side, bridges (5) which run adjacently spaced transverse to the ribs (4), and gaps (6) which remain between the ribs (4) and the bridges (5), wherein the ribs (4) have a width of at least 4 mm and at most 15 mm, and a number of the protrusions (9) are formed over the width of each of the ribs (4).

2. A plastic planar structure (1) consisting of at least one textile inlay (2) and foam plastic (3) which envelops the inlay (2) and is embossed and/or printed on the upper side of the planar structure (1) and compressed and provided with an embossment (8) on the lower side of the planar structure (1), wherein said embossment (8) consists of protrusions (9) and recessed planar areas (10),
**characterised in that**
the recessed planar areas (10) surround the protrusions (9) and the planar structure (1) comprises gaps (6) and at least one of the recessed areas (10) extends continuously from the gaps (6) to respectively adjacent gaps (6) in order to improve a drainage effect.

3. The plastic planar structure according to claim 1 or 2, **characterised in that** the lower side embossment (8) comprises a number of protrusions (9) per square centimetre.

4. The plastic planar structure according to any one of the preceding claims, **characterised in that** the protrusions (9) are arranged adjacently in rows, and the rows are arranged with an offset with respect to each other.

5. The plastic planar structure according to any one of the preceding claims, **characterised in that** the lower side embossment (8) is or includes a burled pattern.

6. The plastic planar structure according to any one of the preceding claims, **characterised in that** the planar structure (1) is used as a floor covering.

7. A method for manufacturing a plastic planar structure (1) according to claim 1, wherein:
a) a plastisol is applied to a textile inlay (2), and the plastisol is foamed such that ribs (4) which run adjacently spaced and are curved outwards on an upper side and a lower side, and transverse bridges (5) which connect the ribs (4), are created from foam plastic (3);
b) the upper side of the ribs (4) is embossed and/or printed on;
c) and the lower side of the ribs (4) is compressed and provided with an embossment (8) in a way which superficially reduces the curvature.

## Revendications

1. Nappe en plastique (1) composée au moins d'une doublure textile (2) et de matière plastique expansée (3) enveloppant la doublure (2), qui est gaufrée et/ou imprimée sur le côté supérieur de la nappe (1) et densifiée sur le côté inférieur de la nappe (1) et qui est dotée d'un gaufrage (8), qui présente une multiplicité de saillies (9), **caractérisée en ce que** la nappe (1) présente des nervures (4) s'étendant à distance l'une à côté de l'autre et formant le côté inférieur ou une partie du côté inférieur et des protubérances (5) s'étendant à distance l'une à côté de l'autre transversalement aux nervures (4) ainsi que des passages (6) subsistant entre les nervures (4) et les protubérances (5), dans laquelle les nervures (4) présentent une largeur de 4 mm au minimum et de 15 mm au maximum et plusieurs des saillies (9) sont à chaque fois formées sur la largeur des nervures (4).

2. Nappe en plastique (1) composée au moins d'une doublure textile (2) et de matière plastique expansée (3) enveloppant la doublure (2), qui est gaufrée et/ou imprimée sur le côté supérieur de la nappe (1) et densifiée sur le côté inférieur de la nappe (1) et qui est dotée d'un gaufrage (8), qui se compose de saillies (9) et de zones plates en retrait (10), **caractérisée en ce que** les zones en retrait (10) entourent les saillies (9) et la nappe (1) présente des passages (6) et chaque fois au moins une des zones en retrait (10) s'étend en continu des passages (6) jusqu'à chacun des passages voisins (6) afin d'améliorer un effet de drainage.

3. Nappe en plastique (1) selon la revendication 1 ou 2, **caractérisée en ce que** le gaufrage du côté inférieur (8) présente plusieurs saillies (9) par centimètre carré.

4. Nappe en plastique (1) selon l'une quelconque des revendications précédentes, **caractérisée en ce que** les saillies (9) sont disposées en ligne les unes à côté des autres et les lignes sont décalées l'une par rapport à l'autre.

5. Nappe en plastique (1) selon l'une quelconque des revendications précédentes, **caractérisée en ce que** le gaufrage du côté inférieur (8) est ou comprend un motif de noppes.

6. Nappe en plastique (1) selon l'une quelconque des revendications précédentes, **caractérisée en ce que** la nappe (1) est utilisée comme tapis de sol.

7. Procédé pour la fabrication d'une nappe en plastique (1) selon la revendication 1, dans lequel:
a) on dépose un plastisol sur une doublure textile (2) et on provoque le moussage du plastisol, de telle manière qu'il se forme des nervures (4) bombées vers l'extérieur sur un côté supérieur et sur un côté inférieur et s'étendant à distance l'une à côté de l'autre ainsi que des protubérances transversales (5) reliant les nervures (4), en matière plastique expansée (3),
b) on procède au gaufrage et/ou à l'impression du côté supérieur des nervures (4),
c) et on densifie le côté inférieur des nervures (4), à proximité de la surface, en diminuant la courbure et on le munit d'un gaufrage (8).
